# DEMANDE DE BREVET EUROPEEN

(11) **EP 4 385 593 A1**
(43) Date de publication de la demande: **19.06.2024**
(21) Numéro de dépôt: 23214799.1
(22) Date de dépôt: 07.12.2023
(51) Int. Cl.: A63F 13/67, A63F 13/58

(54) **COMMANDE D'UN AVATAR DANS UN ENVIRONNEMENT VIRTUEL**

(30) Priorité: 13.12.2022 FR 2213252
(71) Demandeur: Orange, 92130 Issy-les-Moulineaux (FR)
(72) Inventeur: BOUDIN, Fabrice, 92326 Chatillon (FR); BRUN, Arnaud, 92326 Chatillon (FR)

(57) **Abrégé**

L'invention concerne un procédé de de commande d'un avatar (AV_UT1, AV_UT2, AV_UT3) dans un environnement virtuel, caractérisé en ce qu'en l'absence d'intervention humaine pour animer l'avatar via une interface de commande, le procédé exécutant, dans un dispositif de commande (DC), le déclenchement (S11) d'au moins une action (ACp) de l'avatar dans l'environnement virtuel, ladite au moins une action étant sélectionnée (S4-S6) :
- parmi une première pluralité d'actions (ACT1, ACT2, ACT3) préalablement apprises pendant une durée où l'avatar ou un autre avatar a été animé par au moins un utilisateur dans ledit environnement virtuel, via une interface de commande,
- ou parmi une deuxième pluralité d'actions modélisées numériquement à partir d'un apprentissage d'actions exécutées par au moins un utilisateur dans un environnement réel correspondant à l'environnement virtuel.

## Description

### Domaine de l'invention

L'invention concerne l'animation d'un ou de plusieurs avatars dans le métavers (de l'anglais « *metaverse* », contraction de « *meta universe* ») et plus particulièrement un procédé et un dispositif de commande d'un avatar dans un environnement ou espace virtuel du métavers, en l'absence d'intervention humaine pour commander cet avatar.

### Art antérieur

Aujourd'hui, grâce au développement croissant des technologies de réalité virtuelle, il est possible, à l'aide d'une machine de type ordinateur intégrant un ou plusieurs logiciels dédiés, de simuler numériquement différents environnements, espaces ou mondes réels, de telle manière qu'un utilisateur a la possibilité de vivre une expérience d'immersion totale et de mener une activité senso-motrice dans ces différents environnements virtuels, comme s'il se trouvait dans un environnement, espace ou monde réel. Certains environnements virtuels hébergent une communauté d'utilisateurs présents sous la forme d'avatars qui ont la capacité de se déplacer, d'interagir et d'effectuer différentes actions dans un ou plusieurs de ces environnements virtuels. La représentation d'un environnement virtuel est généralement en trois dimensions. Un tel environnement virtuel est accessible et évolutif via des interactions 3D commandées par une interface homme-machine que l'utilisateur, en tant que personne physique, manipule dans l'environnement réel pour par exemple animer son avatar dans l'environnement virtuel modélisé sous la forme d'un espace bidimensionnel ou tridimensionnel, par exemple en déplaçant son avatar, en le faisant interagir avec un autre avatar, en le faisant parler, en lui faisant exprimer une émotion, etc. Une telle interface homme-machine peut être une manette, le clavier d'un ordinateur, un terminal de communication, un casque de réalité virtuelle, un haut-parleur, etc.

Plusieurs environnements virtuels peuvent co-exister. Les mondes virtuels sont généralement persistants, c'est-à-dire qu'ils ne cessent jamais d'exister. De nombreuses mises en scène différentes peuvent être générées dans ces environnements virtuels, qui dépendent des applications envisagées. Par exemple, dans le domaine du jeu ou du divertissement, un environnement virtuel peut par exemple représenter une ville dans laquelle une chasse au trésor est organisée.

Selon un autre exemple, dans le domaine de l'immobilier, un environnement virtuel peut par exemple représenter un appartement acheté sur plan dans lequel un avatar du client ayant acheté cet appartement peut interagir au cours de sa construction, avant ou après. Selon encore un autre exemple, dans le domaine de la formation, par exemple l'apprentissage de la conduite, un environnement virtuel peut par exemple représenter une route sur laquelle se déplace une voiture à l'approche d'un carrefour, la voiture étant pilotée par un avatar de l'apprenti(e) conducteur ou conductrice.

Compte tenu de l'accroissement de la création de ces environnements virtuels de différents types, il apparaît qu'un utilisateur, personne physique, peut disposer de N avatars différents le représentant dans respectivement N environnements virtuels distincts.

La gestion, éventuellement simultanée, de l'ensemble de ces avatars (ex. les déplacer, interagir avec d'autres avatars, leur faire effectuer d'autres actions, etc.), peut devenir pour l'utilisateur très chronophage, fastidieux et compliqué. Par exemple dans le domaine d'un jeu multi-joueurs mis en scène dans un environnement virtuel particulier, et auquel participe un avatar de l'utilisateur, il est possible que le jeu se déroule jour et nuit, sans interruption. A cet effet, chaque joueur anime son avatar selon ses disponibilités, à certaines heures de la journée ou de la nuit, les utilisateurs pouvant être situés physiquement à différents endroits géographiques, potentiellement à des fuseaux horaires différents. Il en résulte qu'un avatar d'un utilisateur donné dans un environnement virtuel donné ne peut être animé en permanence par cet utilisateur, par exemple lorsque ce dernier pratique une autre activité (travail, sport, repos, etc.) dans le monde réel. Durant ces moments où l'utilisateur pratique une autre activité, les avatars d'autres joueurs peuvent, eux, être animés par ces derniers. Ainsi, par exemple, lorsqu'un avatar de l'utilisateur qui pratique une autre activité est attaqué par l'avatar d'un autre joueur dans l'environnement virtuel, l'avatar de l'utilisateur qui pratique une autre activité n'est pas animé pour répondre immédiatement à l'attaque menée par l'avatar de l'autre joueur. Ainsi, lorsque l'utilisateur se reconnecte à nouveau à l'environnement virtuel, une réadaptation de l'utilisateur est nécessaire pour reprendre le contrôle de son avatar dans l'environnement virtuel, dans lequel le scénario a évolué durant le temps où l'utilisateur pratiquait son autre activité. Une telle réadaptation s'avère d'autant plus fastidieuse si l'utilisateur dispose de N avatars dans N environnements virtuels, susceptible d'impliquer N réadaptation différentes. Il en résulte que les applications de réalité virtuelle actuelle ne sont pas suffisamment développées techniquement pour être complètement satisfaisantes d'un point de vue utilisation et performance. On constate en outre que dans le domaine de l'industrie, le développement des applications de réalité virtuelle, bien que croissant, reste très limité à certains secteurs, tels que par exemple la conception assistée par ordinateur ou la maintenance. Or il pourrait être utile, dans une logique par exemple de maîtrise des coûts ou de dangerosité de reproductibilité, de développer ces applications de réalité dans d'autre secteurs de l'industrie, notamment celui des tests d'un produit ou d'un service particulier.

### Objet et résumé de l'invention

Un des buts de l'invention est de remédier à des inconvénients de l'état de la technique précité en proposant un procédé de commande d'un avatar dans un environnement virtuel, ledit procédé étant exécuté de manière autonome, c'est-à-dire sans intervention d'un utilisateur pour animer l'avatar à l'aide d'une interface homme machine.

A cet effet, un objet de la présente invention concerne un procédé de de commande d'un avatar dans un environnement virtuel, caractérisé en ce qu'en l'absence d'intervention humaine pour animer l'avatar via une interface de commande, le procédé met en oeuvre, dans un dispositif de commande, le déclenchement d'au moins une action de l'avatar dans l'environnement virtuel, ladite au moins une action étant sélectionnée :
- parmi une première pluralité d'actions préalablement apprises pendant une durée où l'avatar ou un autre avatar a été animé par au moins un utilisateur dans l'environnement virtuel, via une interface de commande,
- ou parmi une deuxième pluralité d'actions modélisées numériquement à partir d'un apprentissage d'actions exécutées par au moins un utilisateur dans un environnement réel correspondant à l'environnement virtuel.

Grâce à un tel procédé de commande d'avatar, basé sur l'apprentissage d'actions exécutées soit dans un environnement virtuel, soit dans un environnement réel correspondant à l'environnement virtuel, un avatar est ainsi en mesure d'agir de manière autonome dans un environnement virtuel donné, sans aucune intervention particulière d'un utilisateur ou en l'absence d'un utilisateur chargé d'animer cet avatar.

On appelle environnement virtuel un environnement simulé numériquement à l'aide d'un dispositif de réalité virtuelle, dans lequel un ou plusieurs avatars sont susceptibles de se déplacer et d'interagir avec cet environnement.

Selon un mode de réalisation particulier,
- la première pluralité d'actions comprend un type de mouvement de l'avatar ou de l'autre avatar, ou une interaction de l'avatar ou de l'autre avatar avec un objet ou avec encore un autre avatar, ou une manifestation d'un type de personnalité de l'utilisateur de l'avatar ou de l'autre avatar,
- ladite deuxième pluralité d'actions comprend des actions mises en oeuvre lors de l'utilisation, par au moins un utilisateur, d'un service de communication de données. Un tel mode de réalisation permet à l'avatar, lorsqu'il agit de manière autonome, de disposer d'un ensemble enrichi d'actions qu'il a la possibilité d'exécuter en adéquation avec le type d'environnement virtuel dans lequel évolue cet avatar.

Selon un autre mode de réalisation particulier, le type de personnalité de l'utilisateur est identifié à partir d'au moins un message généré par l'utilisateur via au moins un terminal de communication.

Un tel mode de réalisation permet de qualifier la personnalité de l'utilisateur de l'avatar dans l'environnement réel en exploitant les informations contenues dans les messages que l'utilisateur poste ou envoie via au moins un terminal de communication. La base d'apprentissage des actions sur laquelle se fonde le procédé de commande de l'invention est ainsi avantageusement enrichie d'actions correspondant à des modélisations numériques/graphiques des manifestations de la personnalité de l'avatar dans l'environnement réel, lesquelles sont transposables dans l'environnement virtuel. Si par exemple l'utilisateur poste régulièrement des messages agressifs sur un réseau social, l'agressivité de cet utilisateur sera modélisée numériquement et/ou graphiquement, puis appliquée à l'avatar de cet utilisateur dans l'environnement virtuel, sous la forme par exemple d'un avatar qui montre les poings, qui serre les dents, qui est entouré d'éclairs, etc. Selon un autre exemple, le comportement graphique de l'avatar d'un utilisateur reconnu agressif peut être modifié. Par exemple, dans un jeu de combat virtuel (jeu dans lequel plusieurs joueurs s'affrontent, chacun via son avatar), un avartar "agressif", c'est-à-dire dans lequel on aura insufflé de l'agressivité, attaquera tout avatar passant à proximité de lui, alors qu'un avartar non "agressif" ne fera que se défendre, c'est à dire qu'il répondra aux éventuelles attaques des autres avatars, mais ne sera jamais à l'initiative d'une attaque.

Selon un autre mode de réalisation particulier, le déroulement de ladite au moins une action de l'avatar qui a été déclenchée est enregistré numériquement.

Un tel mode de réalisation permet de garder une trace numérique ou un historique des différentes actions exécutées par l'avatar de manière autonome, en vue de leur analyse ultérieure, pour par exemple détecter certaines anomalies, problèmes ou erreurs dans le déroulement des actions exécutées dans l'environnement virtuel, et ainsi procéder à des corrections et/ou des mises à jour du scénario exécuté dans l'environnement virtuel.

Selon un autre mode de réalisation particulier, pour un utilisateur donné, ladite au moins une action de l'avatar est déclenchée en rapport avec un événement survenu dans l'environnement virtuel, ladite au moins une action étant sélectionnée :
- dans un premier groupe d'actions de la première pluralité d'actions, les actions du premier groupe ayant déjà été exécutées en rapport avec un événement similaire à l'événement survenu,
- dans un deuxième groupe d'actions de la deuxième pluralité d'actions, les actions du deuxième groupe résultant d'une modélisation numérique d'actions exécutées dans un environnement réel en rapport avec un événement similaire à l'évènement survenu.

Un tel mode de réalisation permet la mise en oeuvre d'une sélection particulièrement bien ciblée de l'action à mettre en oeuvre par l'avatar, une telle sélection étant en outre cohérente avec l'événement survenu.

Selon un autre mode de réalisation particulier, ladite au moins une action sélectionnée est une action de la première pluralité d'actions, respectivement de la deuxième pluralité d'actions, qui a été identifiée préalablement comme une action favorite.

Un tel mode de réalisation permet la mise en oeuvre d'une sélection de l'action à mettre en oeuvre par l'avatar qui est basée sur un critère de préférence.

Selon un autre mode de réalisation particulier, ladite au moins une action est sélectionnée aléatoirement parmi la première pluralité d'actions, respectivement la deuxième pluralité d'actions.

Un tel mode de réalisation permet la mise en oeuvre d'une sélection de l'action de manière aléatoire. Une telle sélection aléatoire s'avère particulièrement pertinente, par exemple lorsqu'aucun événement particulier ne survient dans l'environnement virtuel, lorsque aucune action de la première pluralité d'actions, respectivement de la deuxième pluralité d'actions, n'est pertinente par rapport à la situation de l'avatar dans l'environnement virtuel, ou encore lorsque le dispositif de commande décide de modifier le comportement habituel de l'avatar, à des fins de provoquer un effet de surprise de la part d'un autre avatar présent dans l'environnement virtuel et susceptible d'interagir avec l'avatar, etc.

Les différents modes ou caractéristiques de réalisation précités peuvent être ajoutés indépendamment ou en combinaison les uns avec les autres, au procédé de commande d'un avatar, tel que défini ci-dessus.

L'invention concerne également un dispositif de commande d'un avatar dans un environnement virtuel, caractérisé en ce qu'il est configuré pour déclencher, en l'absence d'intervention humaine pour animer l'avatar via une interface de commande, au moins une action de l'avatar dans l'environnement virtuel, ladite au moins une action étant sélectionnée :
- parmi une première pluralité d'actions préalablement apprises pendant une durée où l'avatar ou un autre avatar a été animé par au moins un utilisateur dans l'environnement virtuel, via une interface de commande,
- ou parmi une deuxième pluralité d'actions modélisées numériquement à partir d'un apprentissage d'actions exécutées par au moins un utilisateur dans un environnement réel correspondant à l'environnement virtuel.

L'invention concerne également un programme d'ordinateur comportant des instructions pour la mise en oeuvre du procédé de commande d'un avatar conforme à l'invention, selon l'un quelconque des modes particuliers de réalisation décrits précédemment, lorsque ledit programme est exécuté par un processeur.

De telles instructions peuvent être stockées durablement dans un support mémoire non transitoire du dispositif de commande d'avatar mettant en oeuvre le procédé de commande d'un avatar selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile, un disque dur ou un SSD.

D'autre part, le support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par un exemple un réseau de type Internet. Alternativement, le support d'enregistrement peut être un circuit intégré dans lequel le programme est incorporé, le circuit étant adapté pour exécuter ou pour être utilisé dans l'exécution du procédé de commande d'un avatar précité.

Selon un exemple de réalisation, la présente technique est mise en oeuvre au moyen de composants logiciels et/ou matériels. Dans cette optique, le terme « dispositif » ou « module » peut correspondre dans ce document aussi bien à un composant logiciel, qu'à un composant matériel ou à un ensemble de composants matériels et logiciels.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
La Fig. 1A représente une architecture dans laquelle est mis en oeuvre le procédé de commande d'un avatar, selon un mode de réalisation particulier de l'invention,
La Fig. 1B représente une architecture dans laquelle est mis en oeuvre le procédé de commande d'un avatar, selon un mode de réalisation particulier de l'invention,
La Fig. 2A représente un dispositif de commande d'un avatar, selon un mode de réalisation particulier de l'invention, tel que mis en oeuvre dans l'architecture de la figure 1A,
La Fig. 2B représente un dispositif de commande d'un avatar, selon un mode de réalisation particulier de l'invention, tel que mis en oeuvre dans l'architecture de la figure 1B,
La Fig. 3A représente un module d'intelligence artificielle, selon un mode de réalisation particulier de l'invention, tel que mis en oeuvre dans l'architecture de la figure 1A,
La Fig. 3B représente un module d'intelligence artificielle, selon un mode de réalisation particulier de l'invention, tel que mis en oeuvre dans l'architecture de la figure 1B,
La Fig. 4A représente les principales actions mises en oeuvre dans le procédé de commande d'avatar selon un mode de réalisation particulier de l'invention, tel que mis en oeuvre dans l'architecture de la figure 1A,
La Fig. 4B représente les principales actions mises en oeuvre dans le procédé de commande d'avatar selon un mode de réalisation particulier de l'invention, tel que mis en oeuvre dans l'architecture de la figure 1B.

### Description détaillée de plusieurs modes de réalisation de l'invention

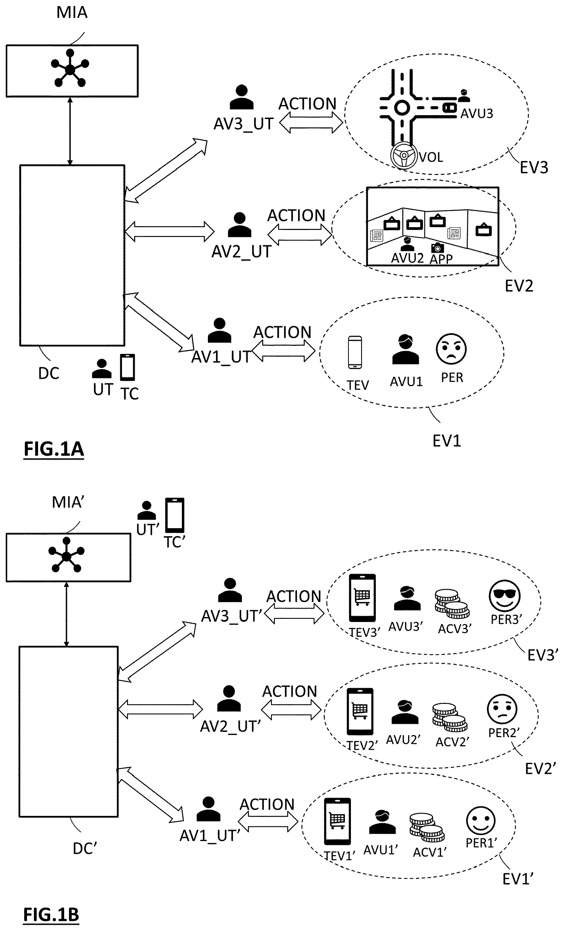

La figure 1A représente une architecture dans laquelle est mis en oeuvre un procédé de commande d'au moins un avatar selon un premier mode de réalisation de l'invention. Dans l'exemple représenté, N environnements virtuels différents, avec N≥1, sont représentés, par exemple trois environnements EV1, EV2, EV3. Dans l'environnement virtuel EV1, respectivement EV2, EV3, une telle commande est appliquée à un avatar AV_UT1, respectivement AV_UT2, AV_UT3 d'un même utilisateur UT. L'environnement virtuel EV1 est par exemple un jeu vidéo dans lequel est impliqué l'avatar AV_UT1 en tant que joueur. L'environnement virtuel EV2 est par exemple un musée virtuel dans lequel est impliqué l'avatar AV_UT2 en tant que visiteur de ce musée. L'environnement virtuel EV3 reproduit par exemple une route sur laquelle évolue l'avatar AV_UT3 en tant que conducteur, dans le cas par exemple de l'apprentissage de la conduite automobile.

Selon l'invention, chacun de ces avatars AV_UT1, AV_UT2, AV_UT3 est commandé, non pas au moyen d'une interface homme-machine manipulée par l'utilisateur de ces avatars, mais automatiquement par un dispositif de commande DC qui sera décrit plus loin dans la description.

Plus précisément, un tel dispositif de commande DC est configuré pour appliquer automatiquement des actions à l'avatar AV_UT1 (respectivement AV_UT2, AV_UT3) dans son environnement virtuel EV1 (respectivement EV2, EV3), en l'absence de toute intervention de l'utilisateur pour commander ou animer ces avatars avec une interface homme machine.

A titre d'exemples non exhaustifs, le type d'actions/activités commandées par le dispositif de commande DC comprend :
- une action physique de l'avatar AV_UT1 (respectivement AV_UT2, AV_UT3),
- une interaction de l'avatar AV_UT1 (respectivement AV_UT2, AV_UT3) avec un objet virtuel,
- une interaction de l'avatar AV_UT1 (respectivement AV_UT2, AV_UT3) avec un autre avatar, par exemple AVU1 (respectivement AVU2, AVU3),
- un type de personnalité particulier de l'utilisateur de l'avatar, par exemple un niveau d'ouverture d'esprit, un niveau d'extraversion, un niveau d'empathie,
- etc.

Dans l'exemple de la figure 1A :
- une action physique de l'avatar AV_UT1 (respectivement AV_UT2, AV_UT3) avec un objet virtuel peut être par exemple :
   -- dans le cas des environnements virtuels EV1, EV2, différents types de mouvement possibles exécutés par l'avatar AV_UT1, respectivement AV_UT2 (ex : se baisser en fléchissant les jambes, se relever, tendre les bras, courir, tourner la tête à droite, se pencher en avant, etc.),
   -- dans le cas de l'environnement virtuel EV3, tourner la tête d'un côté ou de l'autre, écarquiller les yeux, etc.,
- une interaction de l'avatar AV_UT1 (respectivement AV_UT2, AV_UT3) avec un objet virtuel peut être par exemple :
   -- dans le cas de l'environnement virtuel EV1, une interaction de l'avatar AV_UT1 avec une interface virtuelle d'un smartphone virtuel TEV pour par exemple rechercher un contenu à l'aide d'un ou plusieurs mots-clés, regarder un film, acheter un produit en ligne, écouter de la musique en streaming, etc.,
   -- dans le cas de l'environnement virtuel EV2, une interaction de l'avatar AV_UT2 avec un appareil photographique virtuel pour photographier les tableaux virtuels du musée virtuel visité, etc.,
   -- dans le cas de l'environnement virtuel EV3, une interaction de l'avatar AV_UT3 avec un volant virtuel VOL d'une voiture virtuelle, etc.,
- une interaction de l'avatar AV_UT1 (respectivement AV_UT2, AV_UT3) avec un autre avatar peut être par exemple :
   -- dans le cas de l'environnement virtuel EV1, une interaction de l'avatar AV_UT1 avec un autre avatar AVU1 présent dans l'environnement virtuel EV1, ladite interaction pouvant être mise en oeuvre dans le cadre par exemple d'un jeu de combat, d'une partie de cache-cache impliquant les avatars AV_UT1 et AVU1, etc.,
   -- dans le cas de l'environnement virtuel EV2, une interaction de l'avatar AV_UT2 avec un autre avatar AVU2 présent dans l'environnement virtuel EV2, ladite interaction pouvant être mise en oeuvre dans le cadre par exemple d'une discussion virtuelle entre l'avatar AV_UT2, en tant que visiteur du musée, et l'avatar AVU2, en tant que conférencier dans ce musée virtuel,
   -- dans le cas de l'environnement virtuel EV3, une interaction de l'avatar AV_UT3 avec un autre avatar AVU3 présent dans l'environnement virtuel EV3, par exemple une collision entre la voiture virtuelle conduite par l'avatar AV_UT3 et la voiture virtuelle conduite par l'avatar AVU3, une altercation virtuelle, une discussion virtuelle, etc. entre l'avatar AV_UT3 et l'avatar AVU3,
- un type de personnalité particulier de l'utilisateur de l'avatar AV_UT1 (respectivement AV_UT2, AV_UT3) qui peut être modélisé par exemple, dans le cas de l'avatar AV_UT1, sous la forme d'une icône PER représentative de ce type de personnalité (ex : l'icône sourit si l'utilisateur de l'avatar est une personne sereine, l'icône fait la moue si l'utilisateur de l'avatar est une personne renfermée, etc.), ou d'une modification de l'avatar selon le trait de personnalité qui lui correspond (ex : en cas d'humeur joyeuse, l'avatar sourit, en cas de stress, l'avatar est tremblotant, en cas d'ouverture d'esprit, l'avatar tend les bras en souriant, etc..).

Le dispositif de commande DC peut être disposé dans un appareil ou un terminal qui restitue l'environnement virtuel, par exemple un ordinateur, un casque de réalité virtuelle, un smartphone, etc., ou être relié par tout moyen de communication adapté à cet appareil ou terminal.

Le dispositif de commande DC est en outre configuré pour communiquer/interagir, par tout moyen de communication adapté, avec un module d'intelligence artificielle MIA en charge de l'apprentissage des différentes actions et interactions des avatars AV_UT1, AV_UT2, AV_UT3 et/ou de leurs traits de personnalité respectifs, pendant une durée où ces avatars ont été animés par l'utilisateur dans leurs environnements virtuels respectifs, à l'aide d'une interface de commande de type homme machine. La figure 1B représente une architecture dans laquelle est mis en oeuvre un procédé de commande d'au moins un avatar selon un deuxième mode de réalisation de l'invention. Dans l'exemple représenté, N environnements virtuels différents, avec N≥1, sont représentés, par exemple trois environnements EV1', EV2', EV3'. Chacun de ces environnements virtuels modélise un scénario d'usage exécuté dans le cadre de l'utilisation d'un service de communication de données virtuel. Dans l'exemple représenté, un tel service est l'achat d'un produit ou d'un service à l'aide d'un smartphone (« *téléphone intelligent* ») ou de tout autre terminal de communication adapté (ex : tablette, montre connectée, etc.). Il pourrait bien sûr s'agir d'autres types de service, par exemple un service de téléchargement de contenus, un service de simulation d'entretien d'embauche, etc.

Dans l'environnement virtuel EV1', respectivement EV2', EV3', une telle commande est appliquée à un avatar AV_UT1', respectivement AV_UT2', AV_UT3'. Ces avatars peuvent représenter un même utilisateur UT' ou respectivement différents utilisateurs du monde réel ayant préalablement utilisé ce service en situation réelle. Ces avatars peuvent également être créés de toute pièce sans être rattachés à un utilisateur particulier ayant préalablement utilisé ce service en situation réelle.

Selon l'invention, chacun de ces environnements virtuels EV1', EV2', EV3' est une modélisation numérique d'un environnement réel dans lequel des utilisateurs ont été confrontés en situation réelle avec l'utilisation du service de communication de données.

A cet effet, chacun des environnements virtuels EV1', EV2', EV3' est similaire. Dans l'exemple représenté, l'environnement virtuel EV1' (respectivement EV2', EV3') représente un avatar AV_UT1' (respectivement AV_UT2', AV_UT3') en train d'acheter un produit ou un service ACV1' (respectivement ACV2', ACV3') à l'aide de son smartphone TEV1', (respectivement TEV2', TEV3').

Selon l'invention, chacun de ces avatars AV_UT1', AV_UT2', AV_UT3' est commandé, non pas au moyen d'une interface homme-machine manipulée par l'utilisateur de ces avatars, mais automatiquement par un dispositif de commande DC' d'un type similaire au dispositif de commande DC précité.

Plus précisément, un tel dispositif de commande DC' est configuré pour appliquer automatiquement des actions à l'avatar AV_UT1' (respectivement AV_UT2', AV_UT3') dans son environnement virtuel respectif EV1' (respectivement EV2', EV3'), en l'absence de toute intervention de l'utilisateur pour commander ou animer ces avatars avec une interface homme machine.

A titre d'exemples non exhaustifs, le type d'actions/activités commandées par le dispositif de commande DC' comprend :
- une action physique de l'avatar AV_UT1' (respectivement AV_UT2', AV_UT3'), telle que par exemple un mouvement particulier (ex : bouger les doigts pour taper un code, se pencher pour saisir l'objet à acheter, froncer les sourcils, etc.),
- une interaction de l'avatar AV_UT1' (respectivement AV_UT2', AV_UT3') avec un objet virtuel, par exemple un smartphone virtuel TEV1' (respectivement TEV2', TEV3') ou un produit ou service virtuel ACV1' (respectivement ACV2', ACV3'),
- une interaction de l'avatar AV_UT1' (respectivement AV_UT2', AV_UT3') avec un autre avatar AVU1' (respectivement AVU2', AVU3'), tel que par exemple un vendeur, un client, un vigile de la boutique dans lequel se trouve l'objet virtuel ACV1' (respectivement ACV2', ACV3'), etc.,
- un type de personnalité particulier de l'utilisateur de l'avatar ou attribué à l'avatar, par exemple un niveau d'ouverture d'esprit, un niveau d'extraversion, un niveau d'empathie,
- etc.

Dans l'exemple représenté, un tel type de personnalité est représenté sous la forme d'une icône PER1' (respectivement PER2' et PER3'). L'icône PER1' est par exemple représentative d'une personnalité sereine et extravertie. L'icône PER2' est par exemple représentative d'une personnalité anxieuse et introvertie. L'icône PER3' est par exemple représentative d'une personnalité attribuée à une personne malvoyante, extravertie. Dans d'autres exemples, l'icône PER1' (respectivement PER2' et PER3') pourra être remplacée par ou enrichie d'une modification de l'avatar selon le trait de personnalité qui lui correspond (ex : en cas d'humeur joyeuse, l'avatar sourit, en cas de stress, l'avatar est tremblotant, en cas d'ouverture d'esprit, l'avatar tend les bras en souriant, etc..).

Le dispositif de commande DC' peut être disposé dans un appareil ou un terminal qui restitue l'environnement virtuel, par exemple un ordinateur, un casque de réalité virtuelle, un smartphone, etc., ou être relié par tout moyen de communication adapté à cet appareil ou terminal.

Le dispositif de commande DC' est en outre configuré pour communiquer/interagir, par tout moyen de communication adapté, avec un module d'intelligence artificielle MIA' en charge de :
- la modélisation numérique des différentes actions et/ou interactions et/ou traits de caractère /personnalité des utilisateurs représentés ou non par ces avatars et ayant utilisé le service de paiement par smartphone en situation réelle dans des environnements réels respectifs, et éventuellement
- de l'apprentissage des différentes actions et interactions des avatars AV_UT1', AV_UT2', AV_UT3' et/ou de leurs traits de personnalité respectifs, pendant une durée où ces avatars ont utilisé le service de paiement par smartphone dans leurs environnements virtuels respectifs EV1', EV2', EV3'.

Dans les deux modes de réalisation qui ont été représentés ci-dessus en liaison avec les figures 1A et 1B, les dispositifs de commande DC et DC' sont respectivement distincts des modules d'intelligence artificielle MIA et MIA'. Bien entendu, conformément à un autre mode de réalisation, le dispositif de commande DC et le module d'intelligence artificielle MIA, respectivement le dispositif de commande DC' et le module d'intelligence artificielle MIA', peuvent former une seule entité.

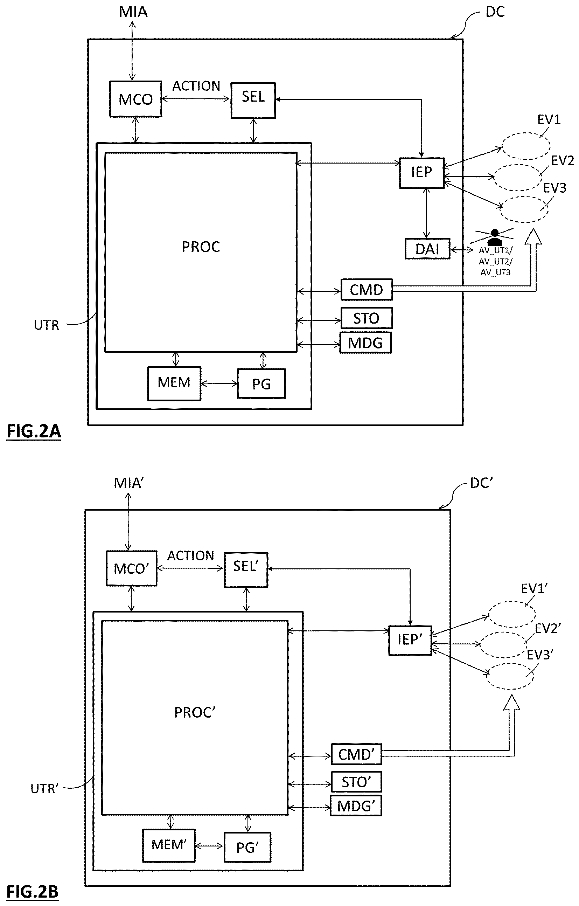

On va maintenant décrire, en référence à la figure 2A, la structure simplifiée du dispositif de commande DC précité.

Un tel dispositif de commande DC comprend :
- une interface de communication MCO configurée pour communiquer, via un réseau de communication RC adapté, avec le module d'intelligence artificielle MIA,
- un module DAI de détermination d'absence d'intervention de l'utilisateur sur son avatar à l'aide d'un interface homme-machine,
- un module IEP d'identification d'éléments présents dans les environnements virtuels EV1, EV2, EV3,
- un module SEL de sélection, à partir des éléments identifiés, d'au moins une action parmi une pluralité d'actions apprises par le module d'intelligence artificielle MIA, pendant une durée :
   -- où les avatars AV_UT1, AV_UT2, AV_UT3 ont été animés par l'utilisateur dans les environnements virtuels respectifs EV1, EV2, EV3, via une interface de commande,
   -- où d'autres avatars (non représentés) ont été animés par d'autres utilisateurs dans les environnements virtuels respectifs EV1, EV2, EV3, via une interface de commande,
- un module MDG de modélisation graphique d'un type de personnalité attribué à l'avatar AV_UT1 et/ou AV_UT2 et/ou AV_UT3,
- un module CMD de commande automatique des avatars AV_UT1, AV_UT2, AV_UT3,
- une mémoire STO dans laquelle peuvent être stockés les éléments identifiés dans les environnements virtuels EV1, EV2, EV3, ainsi que le et/ou les types de personnalité modélisés graphiquement.

Dans l'exemple représenté, une telle mémoire STO est installée dans le dispositif de commande DC. Alternativement, la mémoire STO peut être rendue accessible par le dispositif de commande DC selon l'implémentation envisagée, par exemple s'il n'a pas les ressources matérielles et logicielles nécessaires pour stocker ces informations.

Ces informations sont stockées dans la mémoire STO pour chacun des environnements considérés EV1, EV2, EV3.

Selon un mode particulier de réalisation de l'invention, les actions exécutées par le dispositif de commande DC sont mises en oeuvre par des instructions d'un programme d'ordinateur PG. Pour cela, le dispositif DC a l'architecture classique d'un ordinateur et comprend notamment une mémoire MEM, une unité de traitement UTR, équipée par exemple d'un processeur PROC, et pilotée par le programme d'ordinateur PG stocké en mémoire MEM. Le programme d'ordinateur PG comprend des instructions pour effectuer les actions de :
- communication avec le module d'intelligence artificielle MIA,
- détermination d'absence d'intervention de l'utilisateur sur son avatar à l'aide d'un interface homme-machine,
- identification d'éléments présents dans les environnements virtuels EV1, EV2, EV3,
- sélection, à partir des éléments identifiés, d'au moins une action parmi une pluralité d'actions apprises par le module d'intelligence artificielle MIA,
- commande automatique des avatars AV_UT1, AV_UT2, AV_UT3,
- modélisation graphique d'un type de personnalité attribué à l'avatar AV_UT1 et/ou AV_UT2 et/ou AV_UT3,
- stockage des éléments identifiés dans les environnements virtuels EV1, EV2, EV3, ainsi que le et/ou les types de personnalité modélisés graphiquement,
dans le cadre du procédé de commande autonome d'un avatar qui va être décrit ci-dessous, lorsque le programme est exécuté par le processeur PROC, selon l'un quelconque des modes particuliers de réalisation de l'invention.

A l'initialisation, les instructions de code du programme d'ordinateur PG sont par exemple chargées dans une mémoire RAM (« *Read Access Memory »* en anglais) (non représentée) avant d'être exécutées par le processeur PROC. Le processeur PROC de l'unité de traitement UTR met notamment en oeuvre les actions précitées, selon les instructions du programme d'ordinateur PG.

On va maintenant décrire, en référence à la figure 2B, la structure simplifiée du dispositif de commande DC' précité.

Un tel dispositif de commande DC' comprend :
- une interface de communication MCO' configurée pour communiquer, via un réseau de communication RC' adapté, avec le module d'intelligence artificielle MIA',
- un module IEP' d'identification d'éléments présents dans les environnements virtuels EV1', EV2', EV3',
- un module SEL' de sélection, à partir des éléments identifiés, d'au moins une action parmi une pluralité d'actions apprises par le module d'intelligence artificielle MIA', pendant une durée où un ou plusieurs utilisateurs ont utilisé le service de paiement par smartphone en situation réelle,
- un module MDG' de modélisation graphique d'un type de personnalité attribué à l'avatar AV_UT1' et/ou AV_UT2' et/ou AV_UT3',
- un module CMD' de commande automatique des avatars AV_UT1', AV_UT2', AV_UT3',
- une mémoire STO' dans laquelle peuvent être stockés les éléments identifiés dans les environnements virtuels EV1', EV2', EV3', ainsi que le et/ou les types de personnalité modélisés graphiquement.

Dans l'exemple représenté, une telle mémoire STO' est installée dans le dispositif de commande DC'. Alternativement, la mémoire STO' peut être rendue accessible par le dispositif de commande DC' selon l'implémentation envisagée, par exemple s'il n'a pas les ressources matérielles et logicielles nécessaires pour stocker ces informations.

Ces informations sont stockées dans la mémoire STO' pour chacun des environnements considérés EV1', EV2', EV3'.

Selon un mode particulier de réalisation de l'invention, les actions exécutées par le dispositif de commande DC' sont mises en oeuvre par des instructions d'un programme d'ordinateur PG'. Pour cela, le dispositif DC' a l'architecture classique d'un ordinateur et comprend notamment une mémoire MEM', une unité de traitement UTR', équipée par exemple d'un processeur PROC', et pilotée par le programme d'ordinateur PG' stocké en mémoire MEM'. Le programme d'ordinateur PG' comprend des instructions pour effectuer les actions de :
- communication avec le module d'intelligence artificielle MIA',
- identification d'éléments présents dans les environnements virtuels EV1', EV2', EV3',
- sélection, à partir des éléments identifiés, d'au moins une action parmi une pluralité d'actions apprises par le module d'intelligence artificielle MIA',
- commande automatique des avatars AV_UT1', AV_UT2', AV_UT3',
- modélisation graphique d'un type de personnalité attribué à l'avatar AV_UT1 ' et/ou AV_UT2' et/ou AV_UT3',
- stockage des éléments identifiés dans les environnements virtuels EV1', EV2', EV3', ainsi que le et/ou les types de personnalité modélisés graphiquement,
dans le cadre du procédé de commande autonome d'un avatar qui va être décrit ci-dessous, lorsque le programme est exécuté par le processeur PROC', selon l'un quelconque des modes particuliers de réalisation de l'invention.

A l'initialisation, les instructions de code du programme d'ordinateur PG' sont par exemple chargées dans une mémoire RAM (« *Read Access Memory »* en anglais) (non représentée) avant d'être exécutées par le processeur PROC'. Le processeur PROC' de l'unité de traitement UTR' met notamment en oeuvre les actions précitées, selon les instructions du programme d'ordinateur PG'.

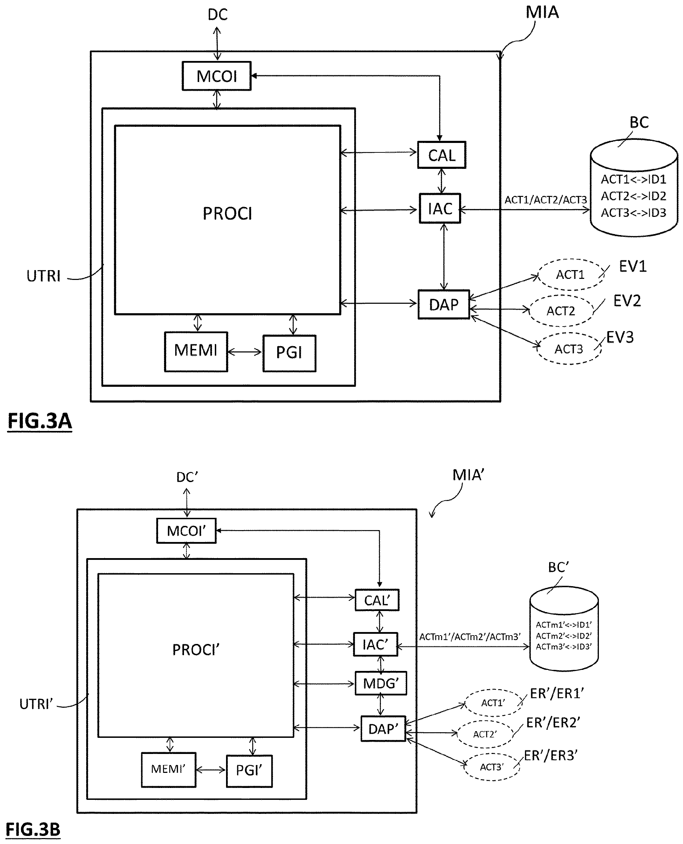

On va maintenant décrire, en référence à la figure 3A, la structure simplifiée d'un module d'intelligence artificielle MIA utilisé dans le système de commande autonome d'avatar selon l'invention, tel que représenté sur la figure 1A.

Un tel dispositif MIA comprend :
- une interface de communication MCOI configurée pour recevoir, en provenance du dispositif de commande DC, au moins une requête de sélection d'une action à appliquer de manière autonome aux avatars AV_UT1, AV_UT2, AV_UT3, et pour envoyer une réponse à cette requête,
- un dispositif DAP d'apprentissage d'une pluralité d'actions ACT1, ACT2, ACT3 exécutées respectivement par les avatars AV_UT1, AV_UT2, AV_UT3 ou d'autres avatars dans les environnements virtuels respectifs EV1, EV2, EV3, pendant une durée prédéfinie ou non, au cours de laquelle les avatars AV_UT1, AV_UT2, AV_UT3 ont été animés par l'utilisateur à l'aide d'une interface homme machine ou les autres avatars, par exemple les avatars AVU1, AVU2, AVU3, ont été animés par un utilisateur ou plusieurs utilisateurs différents, à l'aide d'une interface homme machine,
- une base de connaissance BC qui est configurée pour stocker de manière structurée les différentes actions apprises ACT1, ACT2, ACT3 en association respectivement avec des identifiants ID1, ID2, ID3 des environnements virtuels EV1, EV2, EV3,
- une interface lAC d'accès à la base de connaissance BC,
- un dispositif de calcul CALI qui est configuré pour déterminer l'action la plus pertinente en rapport avec le contexte courant de l'environnement virtuel EV1, (respectivement EV2, EV3) détecté dans la requête de sélection d'action reçue en provenance du dispositif de commande DC.

Bien que dans l'exemple représenté, la base de connaissance BC n'est pas contenue dans le module d'intelligence artificielle MIA, celle-ci peut être intégrée audit module s'il dispose de ressources matérielles et logicielles suffisantes.

A titre d'exemples non exhaustifs, le module d'intelligence artificielle peut être un réseau neuronal, être basé sur la technologie d'apprentissage profond (« *Deep Learning* » en anglais), être basé sur la technologie d'apprentissage statistique, etc. Selon un mode particulier de réalisation de l'invention, les actions exécutées par le module d'intelligence artificielle MIA sont mises en oeuvre par des instructions d'un programme d'ordinateur PGI. Pour cela, le module MIA a l'architecture classique d'un ordinateur et comprend notamment une mémoire MEMI, une unité de traitement UTRI, équipée par exemple d'un processeur PROCI, et pilotée par le programme d'ordinateur PGI stocké en mémoire MEMI. Le programme d'ordinateur PGI comprend des instructions pour effectuer les actions de :
- communication avec le dispositif de commande d'avatar DC,
- apprentissage de la pluralité d'actions ACT1, ACT2, ACT3,
- stockage de manière structurée des différentes actions apprises ACT1, ACT2, ACT3 dans la base de connaissance BC,
- accès à la base de connaissance BC,
- détermination de l'action la plus pertinente en rapport avec le contexte courant de l'environnement virtuel EV1, (respectivement EV2, EV3).

A l'initialisation, les instructions de code du programme d'ordinateur PGI sont par exemple chargées dans une mémoire RAM (« *Read Access Memory »* en anglais) (non représentée) avant d'être exécutées par le processeur PROCI. Le processeur PROCI de l'unité de traitement UTRI met notamment en oeuvre les actions précitées, selon les instructions du programme d'ordinateur PGI.

On va maintenant décrire, en référence à la figure 3B, la structure simplifiée d'un module d'intelligence artificielle MIA' utilisé dans le système de commande autonome d'avatar selon l'invention, tel que représenté sur la figure 1B.

Un tel dispositif MIA' comprend :
- une interface de communication MCOI' configurée pour recevoir, en provenance du dispositif de commande DC', au moins une requête de sélection d'une action à appliquer de manière autonome aux avatars AV_UT1', AV_UT2', AV_UT3', et pour envoyer une réponse à cette requête,
- un dispositif DAP' d'apprentissage d'une pluralité d'actions ACT1', ACT2', ACT3' exécutées respectivement par un même utilisateur ou plusieurs utilisateurs différents, dans le cadre de l'utilisation du service de paiement par smartphone dans un environnement réel ER' ou dans plusieurs environnements réels respectifs ER1', ER2', ER3', pendant une durée prédéfinie ou non,
- un module MDG' de modélisation numérique et/ou graphique de l'environnement réel ER' ou des environnements réels respectifs ER1', ER2', ER3', ainsi que des actions ACT1', ACT2', ACT3',
- une base de connaissance BC' qui est configurée pour stocker de manière structurée les différentes actions ACTm1', ACTm2', ACTm3' qui ont été modélisées en association respectivement avec un identifiant ID' d'un unique environnement virtuel EV' issu de la modélisation graphique et/ou numérique de l'environnement réel ER' ou de plusieurs identifiants ID1', ID2', ID3' de plusieurs environnements virtuels correspondants EV1', EV2', EV3' qui sont issus de la modélisation graphique et/ou numérique des environnements réels respectifs ER1', ER2', ER3',
- une interface IAC' d'accès à la base de connaissance BC',
- un dispositif de calcul CALI'qui est configuré pour déterminer l'action la plus pertinente en rapport avec le contexte courant de l'environnement virtuel EV1', (respectivement EV2', EV3') détecté dans la requête de sélection d'action reçue en provenance du dispositif de commande DC'.

Bien que dans l'exemple représenté, la base de connaissance BC' n'est pas contenue dans le module d'intelligence artificielle MIA', celle-ci peut être intégrée audit module s'il dispose de ressources matérielles et logicielles suffisantes.

A titre d'exemples non exhaustifs, le module d'intelligence artificielle MIA' peut être un réseau neuronal, être basé sur la technologie d'apprentissage profond (« *Deep Learning* » en anglais), être basé sur la technologie d'apprentissage statistique, etc. Selon un mode particulier de réalisation de l'invention, les actions exécutées par le module d'intelligence artificielle MIA' sont mises en oeuvre par des instructions d'un programme d'ordinateur PGI'. Pour cela, le module MIA' a l'architecture classique d'un ordinateur et comprend notamment une mémoire MEMI', une unité de traitement UTRI', équipée par exemple d'un processeur PROCI', et pilotée par le programme d'ordinateur PGI' stocké en mémoire MEMI'. Le programme d'ordinateur PGI' comprend des instructions pour effectuer les actions de :
- communication avec le dispositif de commande d'avatar DC',
- apprentissage de la pluralité d'actions ACT1', ACT2', ACT3' dans l'environnement réel ER' ou dans plusieurs environnements réels différents ER1', ER2', ER3',
- modélisation numérique et/ou graphique des d'actions ACT1', ACT2', ACT3',
- stockage de manière structurée dans la base de connaissance BC' des différentes actions ACTm1', ACTm2', ACTm3' modélisées numériquement et/ou graphiquement,
- accès à la base de connaissance BC',
- détermination de l'action la plus pertinente en rapport avec le contexte courant de l'environnement virtuel EV1', (respectivement EV2', EV3').

A l'initialisation, les instructions de code du programme d'ordinateur PGI' sont par exemple chargées dans une mémoire RAM (« *Read Access Memory »* en anglais) (non représentée) avant d'être exécutées par le processeur PROCI'. Le processeur PROCI' de l'unité de traitement UTRI' met notamment en oeuvre les actions précitées, selon les instructions du programme d'ordinateur PGI'.

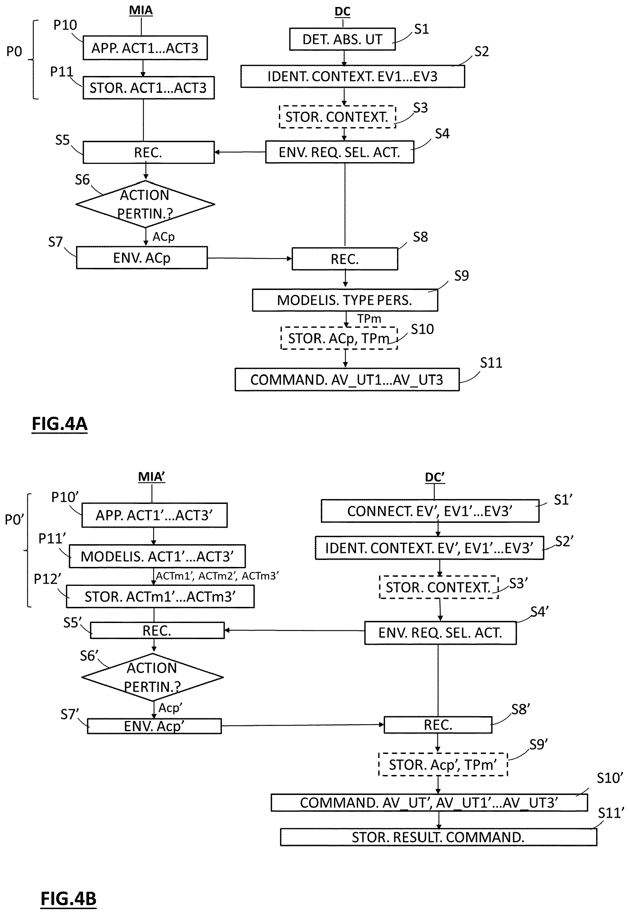

On décrit maintenant, en relation avec la figure 4A, ensemble les figures 1A, 2A et 3A, le déroulement d'un procédé de commande d'un avatar, selon un mode de réalisation particulier de l'invention.

Dans ce mode de réalisation, le procédé de commande d'avatar est mis en oeuvre par le système de commande représenté sur la figure 1A, impliquant le dispositif de commande DC illustré en figure 2A et le module d'intelligence artificielle MIA illustré en figure 3A.

Le procédé de commande d'avatar illustré en figure 4A comprend les étapes suivantes.

Au cours d'une phase préalable de configuration d'apprentissage P0, le module MIA réalise en P10, via son module DAP, un apprentissage de la pluralité d'actions précitée ACT1 (respectivement ACT2, ACT3) mise en oeuvre par l'avatar AV_UT1 (respectivement AV_UT2, AV_UT3) dans son environnement virtuel EV1 (respectivement EV2, EV3), lorsque cet avatar est commandé ou animé par un utilisateur à l'aide d'une interface homme machine.

Cet apprentissage peut être mis en oeuvre tant que l'utilisateur commande ou anime son avatar ou encore pour une durée donnée, par exemple un jour donné, une semaine donnée, un semestre donné, etc.

Au cours de cet apprentissage P10, le dispositif DAP apprend la composition/structure numérique et/ou graphique de l'environnement virtuel EV1 (respectivement EV2, EV3) et le type d'actions/activités que l'utilisateur a appliqué à son avatar à l'aide d'une interface homme machine, telles qu'en particulier :
- une action physique de l'avatar AV_UT1 (respectivement AV_UT2, AV_UT3),
- une interaction de l'avatar AV_UT1 (respectivement AV_UT2, AV_UT3) avec un objet virtuel,
- une interaction de l'avatar AV_UT1 (respectivement AV_UT2, AV_UT3) avec un autre avatar, par exemple AVU1 (respectivement AVU2, AVU3),
- un type de personnalité particulier de l'utilisateur de l'avatar AV_UT1 (respectivement AV_UT2, AV_UT3).

S'agissant du type de personnalité particulier, le dispositif DAP utilise notamment des techniques d'apprentissage automatique (« *Machine Learning* » en anglais) et divers traitements de langage naturel dans le cas notamment où l'action ou l'interaction virtuelle exécutée est une communication écrite ou orale. De telles techniques peuvent être également utilisées pour identifier certains traits de caractères de l'utilisateur qui manipule son avatar dans chacun des environnements virtuels EV1, EV2, EV3, notamment en exploitant certaines traces numériques générées par l'utilisateur UT lorsque ce dernier communique à l'aide d'un terminal de communication TC, par exemple via sa messagerie électronique, via des messages de type SMS (« *Short Message Service* » en anglais), via des vidéos, des commentaires, etc. postés sur des réseaux sociaux, etc.

Le dispositif DAP du module MIA peut attribuer un ou plusieurs types de personnalité à l'utilisateur en se basant par exemple le modèle des Big 5 tel que décrit dans le document : « Goldberg, L. R. (1981). Language and individual différences: The search for universals in personality lexicons. In Wheeler (Ed.), Review of Personality and social psychology, Vol. 1, 141-165. Beverly Hills, CA: Sage ». Ce modèle permet de décrire la personnalité en utilisant les cinq types principaux suivants :
- L'ouverture : appréciation de l'art, de l'émotion, de l'aventure, des idées peu communes, curiosité et imagination ;
- La conscienciosité : autodiscipline, respect des obligations, organisation plutôt que spontanéité ; orienté vers des buts ;
- L'extraversion : énergie, émotions positives, tendance à chercher la stimulation et la compagnie des autres, fonceur ;
- L'agréabilité : tendance à être compatissant et coopératif plutôt que soupçonneux et antagonique envers les autres ;
- Le neuroticisme : tendance à éprouver facilement des émotions désagréables comme la colère, l'inquiétude ou la dépression.

A l'issue de l'apprentissage des types de personnalités basé sur ce modèle, le dispositif DAP a évalué l'utilisateur cinq fois différemment, selon les cinq types précités.

En pratique, le dispositif DAP attribue à l'utilisateur une note pour chacun des cinq types (par exemple 1, 2, 3, 4 ou 5). La personnalité de l'utilisateur est donc décrite par cinq notes différentes (une note relative à l'ouverture, une note relative à la conscienciosité, une note relative à l'extraversion, une note relative à l'agréabilité et enfin une note relative au neuroticisme). Ainsi, par exemple sur le type « extraversion », est attribuée à l'utilisateur une note allant de 1 à 5 selon son niveau d'extraversion, la note minimale 1/5 correspondant à une personnalité très introvertie et la note maximale 5/5 correspondant à une personnalité très extravertie. Cette attribution de note est mise en oeuvre de la même façon pour les quatre autres types. A l'issue de l'apprentissage des actions physiques ACT1 (respectivement ACT2, ACT3) de l'avatar AV_UT1 (respectivement AV_UT2, AV_UT3), des interactions de l'avatar AV_UT1 (respectivement AV_UT2, AV_UT3) avec un objet ou un autre avatar, le dispositif DAP détecte des actions (ex : téléchargement de contenus, communication téléphonique, course à pied, test de culture générale, etc.) ou réactions habituelles de l'avatar concerné (ex : fuite en cas d'attaque, riposte face à un autre avatar agressif, etc.), ainsi que des trajets habituels de cet avatar dans son environnement virtuel correspondant, via une analyse de la géolocalisation de l'avatar AV_UT1 (respectivement AV_UT2, AV_UT3).

Une fois l'apprentissage effectué, en P11, le module MIA stocke la pluralité d'actions ACT1, ACT2, ACT3 apprises dans la base de connaissance BC, via l'interface d'accès IAC.

La pluralité d'actions ACT1, ACT2, ACT3 est stockée de manière structurée en association avec l'avatar correspondant AV_UT1, AV_UT2, AV_UT3. A cet effet, la pluralité d'actions ACT1 (respectivement ACT2, ACT3) est stockée en association avec un identifiant ID1 (respectivement ID2, ID3) de l'environnement virtuel EV1 (respectivement EV2, EV3). Plus précisément, la pluralité d'actions ACT1 (respectivement ACT2, ACT3) est stockée de manière hiérarchisée dans un arbre de décisions sous la forme d'un catalogue d'actions possibles après la survenue d'un évènement donné. Dans le cas par exemple où l'événement donné est une attaque de l'avatar par un autre avatar, un groupe d'actions GA1 (respectivement GA2, GA3) de la pluralité d'actions ACT1 (respectivement ACT2, ACT3) comprend des actions possibles pour l'avatar AV_UT1 (respectivement AV_UT2, AV_UT3), telles que par exemple fuir, se laisser faire, attaquer son adversaire, etc. Il peut s'agir d'actions favorites, par exemple des actions habituelles de l'avatar en rapport avec un évènement particulier qui survient dans l'environnement virtuel ou des actions jugées « culte » d'un autre avatar (ex : un avatar qui parle couramment anglais, un avatar qui gagne toujours les quiz de culture générale, un avatar qui fait un parcours sans faute au permis de conduire, etc.). Dans le cas où les actions habituelles de l'avatar sont des trajets empruntés régulièrement par l'avatar dans l'environnement virtuel considéré, des données de localisation relatives à ces trajets sont également stockées dans la base de connaissance BC.

Dans un mode de réalisation particulier, un groupe d'actions GA1 (respectivement GA2, GA3) peut comprendre une séquence de micro-actions qui composent une action particulière de l'avatar AV_UT1 ou d'un autre avatar (respectivement AV_UT2, AV_UT3) (ex. se baisser en fléchissant les jambes, se relever, tendre le bras, courir sur un mètre, tourner la tête à droite, etc.).

Dans un autre mode de réalisation particulier, un groupe d'actions peut comprendre une routine d'actions (enchainement d'actions) de l'avatar AV_UT1 (respectivement AV_UT2, AV_UT3) ou d'un autre avatar, sous la forme d'un bot.

A l'issue de la phase de configuration d'apprentissage P0, le dispositif de commande DC met alors en oeuvre ce qui suit.

Au cours d'une étape S1, le dispositif de commande DC détermine, via son module DAI, l'absence d'intervention de l'utilisateur sur son avatar AV_UT1 (respectivement AV_UT2, AV_UT3), à l'aide d'une interface homme machine.

Dans un mode de réalisation particulier, une telle détermination peut être exécutée à un instant particulier qui a été paramétré par l'utilisateur de l'avatar, soit directement dans le dispositif de commande DC, soit sur un serveur dédié. L'utilisateur peut par exemple décider qu'à minuit, son avatar sera commandé de manière autonome par le dispositif DC et indiquer cette heure au dispositif de commande DC ou au serveur dédié.

Dans un autre mode de réalisation particulier, une telle détermination peut être exécutée suite à la réception par le dispositif de commande DC d'une instruction explicite de l'utilisateur de commander son avatar de manière autonome. Une telle instruction comprend par exemple l'appui sur une touche particulière du dispositif de commande, l'envoi d'une commande vocale, l'écriture d'un message particulier, etc. Dans encore un autre mode de réalisation particulier, une telle détermination peut être exécutée suite à une détection de l'immobilité de l'avatar au bout d'une certaine durée.

Au cours d'une étape S2, le dispositif de commande DC identifie, via son module IEP, le contexte courant de l'environnement virtuel considéré EV1 (respectivement EV2, EV3). Par exemple, le module IEP détermine l'identifiant ID1 (respectivement ID2, ID3) associé à l'environnement virtuel concerné EV1 (respectivement EV2, EV3), le nombre d'avatars et les objets présents dans la scène, leur localisation respective, etc.

Toutes les données identifiées en S2 sont éventuellement stockées en S3 dans la mémoire STO du dispositif de commande DC. L'étape S3 étant facultative, elle est représentée en pointillé sur la figure 4A.

L'avantage d'un tel stockage permet par exemple de tracer certaines anomalies susceptibles de survenir lors de la sélection et de l'application autonome de la commande des actions aux avatars AV_UT1, AV_UT2, AV_UT3, de manière à débugger et/ou mettre à jour et/ou enrichir par de nouvelles fonctionnalités respectivement le jeu proposé dans l'environnement virtuel EV1, la visite immersive proposé dans l'environnement virtuel EV2, l'apprentissage de la conduite proposé dans l'environnement virtuel EV3. Un tel stockage permet en outre de consigner par exemple les aléas que rencontrent les avatars AV_UT1, AV_UT2, AV_UT3 dans leurs environnements virtuels respectifs EV1, EV2, EV3.

Au cours d'une étape S4, le module SEL du dispositif de commande DC déclenche l'envoi d'une requête de sélection d'action(s) au module d'intelligence artificielle MIA, via l'interface de communication MCO. Il peut par exemple s'agir d'une requête de type http (« *Hypertext Transfer Protocol* » en anglais), SQL (« *Structured Query Language* » en anglais), AJAX (« *Asynchronous JavaScript And XML* » en anglais), etc.

Une telle requête contient les données identifiées en S2.

Le module MIA reçoit cette requête en S5, via son module de communication MCOI. Le dispositif CALI détermine alors en S6 au moins une action la plus pertinente ACp parmi la pluralité d'actions ACT1 (respectivement ACT2, ACT3) en rapport avec le contexte courant de l'environnement virtuel EV1 (respectivement EV2, EV3) contenu dans la requête reçue.

Si un évènement particulier est survenu en rapport avec le contexte courant, une telle action pertinente ACp est sélectionnée en S6 dans le groupe d'actions GA1 (respectivement GA2, GA3) qui peut contenir une ou plusieurs actions apprises lors de la survenue d'un évènement similaire à celui rencontré dans le contexte courant. Une telle action pertinente ACp peut être également sélectionnée en tant qu'action favorite faisant partie de la pluralité d'actions ACT1 (respectivement ACT2, ACT3). Une telle action pertinente ACp peut être également sélectionnée aléatoirement dans la pluralité d'actions ACT1 (respectivement ACT2, ACT3).

En S7, le module MIA envoie une réponse au dispositif de commande DC, via son module de communication MCOI, la réponse contenant l'action pertinente ACp calculée par le dispositif de calcul CALI. La réponse peut également contenir, en association avec l'action pertinente ACp, au moins une note attribuée à au moins un type de personnalité de l'utilisateur de l'avatar AV_UT1 (respectivement AV_UT2, AV_UT3).

Le dispositif de commande DC reçoit cette réponse en S8, via son module de communication MCO.

En S9, si la réponse reçue contient une ou plusieurs notes représentatives respectivement d'un ou de plusieurs types de personnalité, le module MDG du dispositif de commande DC modélise numériquement ou graphiquement cette ou ces notes sous la forme par exemple d'une icône TPm représentative de ce type de personnalité (ex : l'icône sourit si l'utilisateur de l'avatar est une personne sereine, l'icône fait la moue si l'utilisateur de l'avatar est une personne renfermée, etc.), ou d'une modification TPm à appliquer à l'avatar AV_UT1 (respectivement AV_UT2, AV_UT3) selon le trait de personnalité qui lui correspond (ex : en cas d'humeur joyeuse, l'avatar sourit, en cas de stress, l'avatar est tremblotant, en cas d'ouverture d'esprit, l'avatar tend les bras en souriant, etc..).

En S10, l'action pertinente ACp et le/les type(s) de personnalité modélisés TPm sont stockés éventuellement dans la mémoire STO du dispositif de commande DC. L'étape S10 étant facultative, elle est représentée en pointillé sur la figure 4A.

En S11, le module de commande CMD du dispositif de commande DC applique alors à l'avatar AV_UT1 (respectivement AV_UT2, AV_UT3) l'action pertinente ACp, le cas échéant conformément au/aux type(s) de personnalité modélisé(s) TPm.

Bien entendu, l'utilisateur des avatars AV_UT1, AV_UT2, AV_UT3 peut à tout moment reprendre la commande de ces derniers à l'aide de l'interface homme machine. Dans ce cas, les étapes S1 à S11 ne sont pas mises en oeuvre et une nouvelle phase P0 de configuration d'apprentissage est mise en oeuvre de manière à poursuivre l'enrichissement de la base de connaissance BC des nouvelles actions appliquées aux avatars AV_UT1, AV_UT2, AV_UT3 par l'utilisateur à l'aide de l'interface homme machine.

La reprise de la commande des avatars par l'utilisateur peut prendre différentes formes.

Dans un mode de réalisation particulier, une telle reprise peut être exécutée à un instant particulier qui a été paramétré par l'utilisateur de l'avatar, soit directement dans le dispositif de commande DC, soit sur un serveur dédié. L'utilisateur peut par exemple décider qu'à huit heures du matin, son avatar sera commandé par l'utilisateur et indiquer cette heure au dispositif de commande DC ou au serveur dédié.

Dans un autre mode de réalisation particulier, une telle reprise peut être exécutée suite à la réception par le dispositif de commande DC d'une instruction explicite de l'utilisateur de commander son avatar à l'aide d'une interface homme machine. Une telle instruction comprend par exemple l'appui sur une touche particulière du dispositif de commande, l'envoi d'une commande vocale, l'écriture d'un message particulier, etc.

Dans encore un autre mode de réalisation particulier, une telle reprise peut être exécutée suite à une détection de l'actionnement de l'interface homme machine pour commander l'avatar.

On décrit maintenant, en relation avec la figure 4B, ensemble les figures 1B, 2B et 3B, le déroulement d'un procédé de commande d'un avatar, selon un autre mode de réalisation particulier de l'invention.

Dans ce mode de réalisation, le procédé de commande d'avatar est mis en oeuvre par le système de commande représenté sur la figure 1B, impliquant le dispositif de commande DC' illustré en figure 2B et le module d'intelligence artificielle MIA' illustré en figure 3B.

Le procédé de commande d'avatar illustré en figure 4B comprend les étapes suivantes.

Au cours d'une phase préalable de configuration d'apprentissage P0', le module MIA' réalise en P10', via son module DAP', un apprentissage de la pluralité d'actions précitée ACT1' (respectivement ACT2', ACT3') mise en oeuvre par un ou plusieurs utilisateurs différents en situation réelle, dans un même environnement réel ER' ou dans plusieurs environnements réels respectifs ER1', ER2', ER3', lorsque l'utilisateur ou les différents utilisateurs utilisent un service de communication de données, tel que par exemple le service de paiement par smartphone précité.

Cet apprentissage est par exemple mis en oeuvre pour une durée donnée, par exemple un jour donné, une semaine donnée, un semestre donné, etc.

Au cours de cet apprentissage P10', le dispositif DAP' apprend la composition/structure réelle de l'environnement réel ER' ou des environnements réels ER1', ER2', ER3', ainsi que le type d'actions/activités que l'utilisateur ou les utilisateurs ont réalisés lors de l'utilisation du service, telles que par exemple :
- une action particulière d'un utilisateur donné, telle que par exemple un mouvement particulier (ex : bouger les doigts pour taper un code, se pencher pour saisir l'objet à acheter, froncer les sourcils, etc.),
- une interaction d'un utilisateur donné avec un objet réel, par exemple un smartphone ou un produit ou service que l'utilisateur a l'intention d'acheter,
- une interaction d'un utilisateur donné avec au moins un autre utilisateur, tel que par exemple un vendeur, un client, un vigile de la boutique dans lequel se trouve un objet réel, etc.,
- un type de personnalité particulier d'un utilisateur donné UT', par exemple un niveau d'ouverture d'esprit, un niveau d'extraversion, un niveau d'empathie, notamment en exploitant certaines traces numériques générées par l'utilisateur UT' lorsque ce dernier communique à l'aide d'un terminal de communication TC', par exemple via sa messagerie électronique, via des messages de type SMS, via des vidéos, des commentaires, etc. postés sur des réseaux sociaux, etc.
- etc.

Le dispositif d'apprentissage DAP' est identique au dispositif d'apprentissage DAP décrit plus haut. Pour cette raison, il ne sera pas décrit plus avant.

Une fois l'apprentissage effectué, en P1 1', le module de modélisation numérique et/ou graphique MDG' procède à une modélisation numérique et/ou graphique de tous les éléments qui composent l'environnement réel ER' ou les environnements réels ER1', ER2', ER3', ainsi que de la pluralité d'actions ACT1', ACT2', ACT3' réalisées. La pluralité d'actions modélisées est notée ACTm1', ACTm2', ACTm3'. Dans l'exemple du service de paiement par smartphone, la modélisation concerne non seulement le et/ou les utilisateurs impliqués dans ce service, sous la forme d'avatars respectifs AV_UT' ou respectivement AV_UT1', AV_UT2', AV_UT3', ou encore d'autres avatars AVU' ou AVU1', AVU2', AVU3', mais aussi, les objets (smartphone, produit ou service, boutique, etc.), les discussions établies lors de l'utilisation du service, la scène (un centre commercial, une boutique de quartier, etc.) composant l'environnement réel ER' ou chacun des environnements réels ER1', ER2', ER3'.

En P12', le module MIA' stocke la pluralité d'actions modélisées ACTm1', ACTm2', ACTm3' dans la base de connaissance BC', via l'interface d'accès IAC'.

La pluralité d'actions ACTm1', ACTm2', ACTm3' est stockée de manière structurée en association avec un identifiant ID' d'un environnement virtuel EV' reproduisant numériquement et/ou graphiquement l'environnement réel ER' ou un identifiant ID1' (respectivement ID2', ID3') d'un environnement virtuel EV1' (respectivement EV2', EV3') reproduisant numériquement et/ou graphiquement l'environnement réel ER1' (respectivement ER2', ER3'). Plus précisément, la pluralité d'actions ACTm1' (respectivement ACTm2', ACTm3') est stockée de manière hiérarchisée dans un arbre de décisions sous la forme d'un catalogue d'actions possibles après la survenue d'un évènement donné. Dans le cas par exemple où l'événement donné est la consultation d'un solde, un groupe d'actions GA1' (respectivement GA2', GA3') de la pluralité d'actions ACTm1' (respectivement ACTm2', ACTm3') comprend des actions possibles pour un avatar AV_UT' d'un utilisateur du service dans l'environnement virtuel EV' ou un avatar AV_UT1' (respectivement AV_UT2', AV_UT3') d'un utilisateur du service dans l'environnement virtuel EV1' (respectivement EV2', EV3'), telles que par exemple acheter un produit ou un service si le solde est positif, contacter un conseiller bancaire si le solde est négatif, demander un crédit au commerçant, etc. Il peut s'agir d'actions favorites, par exemple des actions habituelles de l'avatar en rapport avec un évènement particulier qui survient dans l'environnement virtuel ou des actions jugées « culte » d'un autre avatar (ex : un avatar qui ne se trompe jamais en saisissant le montant à payer, un avatar toujours serein lors de ses achats, un avatar qui utilise le service souvent au même endroit, etc.). Dans le cas où les actions habituelles de l'avatar sont des trajets empruntés régulièrement par l'avatar dans l'environnement virtuel considéré, des données de localisation relatives à ces trajets sont également stockées dans la base de connaissance BC'. Il peut aussi s'agir d'actions non favorites exécutées en rapport avec l'utilisation du service (ex : un avatar qui s'énerve car il ne parvient pas à saisir correctement son code secret, un avatar malvoyant qui ne parvient pas à utiliser les commandes vocales sur son smartphone, etc.).

Dans un mode de réalisation particulier, un groupe d'actions GA1' (respectivement GA2', GA3') peut comprendre une séquence de micro-actions qui composent une action particulière de l'avatar AV_UT' ou de l'avatar AV_UT1' (respectivement AV_UT2', AV_UT3') (ex. se baisser en fléchissant les jambes, se relever, tendre le bras, tourner la tête à droite, avancer la main pour saisir un code secret sur le clavier du smartphone, etc.).

Dans un autre mode de réalisation particulier, un groupe d'actions peut comprendre une routine d'actions (enchainement d'actions) de l'avatar AV_UT' ou de l'avatar AV_UT1' (respectivement AV_UT2', AV_UT3') ou encore d'un autre avatar, sous la forme d'un bot.

La phase de configuration d'apprentissage P0' décrite ci-dessus permet en particulier de simuler un certain nombre de situations qui peuvent se produire lors de l'utilisation du service de paiement par smartphone, en situation réelle.

A l'issue de la phase de configuration d'apprentissage P0', le dispositif de commande DC' met alors en oeuvre ce qui suit.

Au cours d'une étape S1', le dispositif de commande DC' se connecte à au moins un environnement virtuel EV' ou, en parallèle, à plusieurs environnements virtuels EV1', EV2', EV3'. La mise en scène virtuelle qui est jouée dans chacun de ces environnements virtuels peut par exemple correspondre à une étape particulière de la mise en oeuvre du service de paiement par smartphone. Par exemple, dans chacun des environnements virtuels EV1', EV2', EV3', l'étape de saisie sur le smartphone du destinataire du paiement par respectivement l'avatar AV_UT1', AV_UT2', AV_UT3', est simulée respectivement de trois manières différentes. Dans un autre exemple, dans chacun des environnements virtuels EV1', EV2', EV3', une étape différente du service de paiement par smartphone est simulée, par exemple :
- l'étape de lancement de l'application du service de paiement sur le smartphone, par l'avatar AV_UT1', dans l'environnement virtuel EV1',
- l'étape d'identification sur l'application, par exemple via la saisie, par l'avatar AV_UT2', d'un identifiant et d'un mot de passe, dans l'environnement virtuel EV2',
- l'étape de sélection du type d'opérations bancaires (ex : transfert d'argent, achat, demande de crédit, etc.) à effectuer par l'avatar AV_UT3' dans l'environnement virtuel EV3'.

Dans un mode de réalisation particulier, une telle connexion peut être exécutée à un instant particulier qui a été paramétré par un utilisateur souhaitant tester le service de paiement par smartphone selon différentes configurations possibles ou sur un aspect particulier (ex : saisie du code secret, envoi d'un message d'erreur lors du paiement, etc.), cet instant particulier ayant été paramétré soit directement dans le dispositif de commande DC', soit sur un serveur dédié. L'utilisateur peut par exemple décider que le dernier jour de chaque mois, le dispositif DC' déclenchera de manière autonome des tests virtuels du service de paiement par smartphone, et indiquer la date correspondant à ce jour au dispositif de commande DC' ou au serveur dédié.

Dans un autre mode de réalisation particulier, une telle connexion S1' peut être exécutée suite à la réception par le dispositif de commande DC' d'une instruction explicite de l'utilisateur de déclencher des tests du service de manière autonome. Une telle instruction comprend par exemple l'appui sur une touche particulière du dispositif de commande, l'envoi d'une commande vocale, l'écriture d'un message particulier, etc.

Au cours d'une étape S2', le dispositif de commande DC' identifie, via son module IEP', le contexte courant de l'environnement virtuel considéré EV' ou EV1' (respectivement EV2', EV3') auquel ou auxquels il s'est connecté. Par exemple, le module IEP' détermine l'identifiant ID' ou ID1' (respectivement ID2', ID3') associé à l'environnement virtuel concerné EV' ou EV1' (respectivement EV2', EV3'), le nombre d'avatars et les objets présents dans la scène, leur localisation respective, etc.

Toutes les données identifiées en S2' sont éventuellement stockées en S3' dans la mémoire STO' du dispositif de commande DC'. L'étape S3' étant facultative, elle est représentée en pointillé sur la figure 4B.

Au cours d'une étape S4', le module SEL' du dispositif de commande DC' déclenche l'envoi d'une requête de sélection d'action(s) au module d'intelligence artificielle MIA', via l'interface de communication MCO'. Il peut par exemple s'agir d'une requête de type http, SQL, AJAX, etc.

Une telle requête contient les données identifiées en S2'.

Le module MIA' reçoit cette requête en S5', via son module de communication MCOI'.

Le dispositif CALI' détermine alors en S6' au moins une action la plus pertinente ACp' parmi la pluralité d'actions ACT1' (respectivement ACT2', ACT3') en rapport avec le contexte courant de l'environnement virtuel EV' ou EV1' (respectivement EV2', EV3') contenu dans la requête reçue.

Si un évènement particulier est survenu en rapport avec le contexte courant, une telle action pertinente ACp' est sélectionnée en S6' dans le groupe d'actions GA1' (respectivement GA2', GA3') qui peut contenir une ou plusieurs actions apprises lors de la survenue d'un évènement déjà rencontré en situation réelle et similaire à celui rencontré dans le contexte courant virtuel. Une telle action pertinente ACp' peut être également sélectionnée en tant qu'action favorite faisant partie de la pluralité d'actions ACT1' (respectivement ACT2', ACT3'). Une telle action pertinente ACp' peut être également sélectionnée aléatoirement dans la pluralité d'actions ACT1' (respectivement ACT2', ACT3') de manière à tester un comportement du service qui n'a pas forcément été rencontré en situation réelle.

En S7', le module MIA' envoie une réponse au dispositif de commande DC', via son module de communication MCOI', la réponse contenant l'action pertinente ACp' calculée par le dispositif de calcul CALI'. La réponse peut également contenir, en association avec l'action pertinente ACp', au moins un type TPm' de personnalité d'un utilisateur UT' qui a testé le service en situation réelle, ledit type ayant été modélisé en P11'.

Le dispositif de commande DC' reçoit cette réponse en S8', via son module de communication MCO'.

En S9', l'action pertinente ACp' et le/les type(s) de personnalité modélisés TPm' sont stockés éventuellement dans la mémoire STO' du dispositif de commande DC'. L'étape S9' étant facultative, elle est représentée en pointillé sur la figure 4B.

En S10', le module de commande CMD' du dispositif de commande DC' applique alors de manière autonome à l'avatar AV_UT' ou A V _UT1' (respectivement AV_UT2', AV_UT3') l'action pertinente ACp', le cas échéant conformément au/aux type(s) de personnalité modélisé(s) TPm'.

En S11', le résultat de cette action pertinente et les différentes modifications de l'environnement virtuel engendrées à la suite de l'application de cette action sont enregistrés dans la mémoire STO' du dispositif de commande DC'. Un tel stockage S11' permet avantageusement de consigner d'éventuels cas d'erreur qui ne se sont pas produits en situation réelle, ce qui permet d'apporter des mesures correctives au service de paiement par smartphone, par exemple avant le déploiement d'un tel service dans le grand public.

Le procédé de commande autonome qui vient d'être décrit en référence à la figure 4B trouve une application avantageuse dans le cadre de la validation de la conception d'un service de communication de données, tel que le service de paiement par smartphone précité, en permettant à une personne en charge des tests de validation d'un service de répéter facilement et rapidement un grand nombre de jeux de tests virtuels, avec différents cas d'erreurs possibles. Ces jeux de tests vont pouvoir se dérouler de manière autonome en parallèle, de façon synchronisée, dans un l'environnement virtuel EV' ou plusieurs environnements virtuels EV1', EV2', EV3'. Lors de l'étape de configuration d'apprentissage P0', un utilisateur teste en situation réelle le service de paiement. A cet effet, il fait ses courses par exemple sur un marché et paye ses achats à un commerçant à l'aide de son smartphone. L'utilisateur testeur a préalablement installé sur son smartphone une application de paiement et s'est préalablement inscrit au service.

De nombreuses étapes du service peuvent être exécutées lors de la phase P0', telles que par exemple les étapes suivantes :
1/ L'utilisateur testeur lance l'application du service de paiement et s'identifie sur celle-ci, par exemple en saisissant un identifiant et un mot de passe ;
2/ L'utilisateur sélectionne sur l'application le service de paiement, parmi une liste de services proposés : transfert d'argent vers un compte tiers, demande de crédit, etc. ;
3/ L'utilisateur saisit le destinataire du paiement qu'il souhaite effectuer, par exemple le commerçant, par exemple en saisissant le numéro de téléphone mobile du commerçant, ;
4/ L'utilisateur saisit le montant à payer : une vérification est alors effectuée par le service pour vérifier que le solde du compte de l'utilisateur testeur est bien supérieur ou égal au montant à payer, auquel s'ajoute les frais de paiement (par exemple, une somme fixe qui est prélevée par l'opérateur du service à chaque opération de paiement). Si le solde du compte de l'utilisateur testeur est insuffisant, un message est remonté à l'utilisateur via l'application, pour lui demander d'alimenter son compte depuis un autre compte bancaire ou bien de faire une demande de crédit ;
5/ L'utilisateur saisit son code secret qui a été préalablement défini par l'utilisateur, par exemple lors de l'inscription au service ;
6/ Le paiement est alors effectué, puis un message est remonté à l'utilisateur via l'application, pour lui confirmer que son paiement a bien été effectué. En cas de problème, par exemple un problème technique survenu lors du paiement, un message d'erreur est remonté à l'utilisateur testeur, par exemple pour lui indiquer que le paiement n'a pas été effectué et pour lui demander de recommencer le paiement.

Toute ou partie de ces étapes constituent les actions ACT1', ACT2', ACT3' précitées. Il est à noter que ces étapes successives nécessaires pour effectuer un paiement par smartphone peuvent conduire à de très nombreux cas d'erreurs. Ces cas d'erreurs doivent être prévus par l'opérateur du service de paiement lors de la conception du service puis testés avant le déploiement du service, puis à nouveau testés avant le déploiement de chaque nouvelle version du service (ex : évolutions du service). Ces campagnes de tests régulières (à chaque nouvelle version du service) sont longues et coûteuses pour l'opérateur du service car plusieurs testeurs, en parallèle, doivent reproduire systématiquement tous les cas d'erreurs identifiés. Il y a en outre toujours un risque que certains cas d'erreurs ne soient pas testés, tout simplement car ils n'ont pas été prévus.

Des exemples de cas d'erreurs sont listés ci-dessous :
- Lors de l'étape 1/ l'utilisateur saisit un mot de passe erroné, éventuellement plusieurs fois, ce qui aura pour conséquence de bloquer le service ;
- Lors de l'étape 3/ l'utilisateur saisit un destinataire du paiement erroné : par exemple un numéro de téléphone qui n'a pas un format correct (trop court ou trop long), le numéro saisi ne correspond à aucun utilisateur (ex : numéro non attribué ou correspondant à un utilisateur n'ayant pas souscrit au service de paiement par smartphone, etc.).
- Etc.

Dans une implémentation possible de la phase de configuration d'apprentissage P0', un certain nombre d'utilisateurs testeurs est nécessaire, par exemple cent testeurs, qui effectuent des tests pendant une durée prédéterminée, par exemple quatre semaines. Il peut s'agir par exemple de bêta-testeurs pouvant utiliser le service au cours d'une expérimentation, par exemple en vue de son lancement commercial officiel.

Des données relatives aux actions ACT1', ACT2', ACT3' mises en oeuvre lors de l'utilisation du service par les testeurs, lesquelles sont modélisées en P11', puis stockées en P12' comprennent par exemple :
- les nombreux cas d'erreurs précités, rencontrés par les testeurs lors de leur utilisation du service ;
- les déplacements des testeurs (géolocalisation dans l'environnement réel),
- les montants des achats réalisés chez les commerçants,
- l'heure à laquelle ces achats sont effectués,
- etc.

On note que le panel de testeurs utilisés est constitué de telle sorte que pendant la phase de configuration d'apprentissage P0', les testeurs génèrent un grand nombre de cas d'erreurs. Par exemple, on veille à ce que parmi ces testeurs figurent des personnes rencontrant généralement des difficultés dans l'utilisation des outils numériques (smartphones, etc.), des personnes ayant un handicap (déficit visuel par exemple), etc. On suppose en effet que les testeurs ayant ces profils particuliers produiront/rencontreront relativement fréquemment des cas d'erreur lors de leur utilisation du service (probablement plus qu'un technicien en charge de la validation du service et essayant d'imaginer tous les cas d'erreurs possibles).

La mise en oeuvre des étapes S1' à S11' décrites ci-dessus permet quant à elle de tester de N manières différentes, dans N environnements virtuels différents, N versions virtuelles d'un même service de communication de données. De tels tests ne sont plus effectués par des utilisateurs (ou des testeurs) en situation réelle, mais dans un environnement virtuel EV' ou EV1', EV2', EV3' qui est une réplique de l'environnement réel dans lequel ont été faits les tests en situation réelle (ex : réplique des rues, des marchés, des commerçants, etc.) lors de la phase de configuration d'apprentissage précitée P0'. Dans chacun de ces environnements virtuels, au moins un avatar possède un comportement qu'a eu le testeur en situation réelle (ex : déplacements dans les rues de la ville, sur les marchés, achats grâce à des paiements mobiles auprès des commerçants, etc.) et qui a été modélisé par le module MDG' du module d'intelligence artificielle MIA' lors de la phase de configuration d'apprentissage P0' précitée. Ainsi, grâce à l'invention, dans chacun des environnements virtuels précités, des avatars reproduiront les cas d'erreurs à tester, de façon autonome, sans aucune intervention humaine. Des enregistrements informatiques (traces numériques) obtenus en S11' permettent de consigner les éventuels problèmes rencontrés dans ces environnements virtuels par les avatars au cours de leurs achats (ex : un avatar a essayé à plusieurs reprises, sans succès, de payer un commerçant, ou encore un avatar a bloqué son compte après la saisis de plusieurs mots de passe erronés lors de son identification puis n'est jamais parvenu à réinitialiser son mot de passe, etc.). Un opérateur pourra ainsi analyser a posteriori ces traces et ainsi détecter, puis corriger d'éventuelles anomalies logicielles du service de paiement. Il sera aussi possible d'améliorer le service, par exemple de l'enrichir avec des nouvelles fonctionnalités, grâce à l'analyse du comportement des avatars (ex : s'il apparaît qu'il est très fréquent - sur un marché par exemple - que les avatars effectuent plusieurs paiements pendant une fenêtre relativement courte - par exemple quinze minutes - l'opérateur pourra choisir dans une prochaine version du service de demander à l'utilisateur de s'identifier au plus toutes les quinze minutes, et non à chaque paiement, afin de rentre l'utilisation du service plus aisée pour l'utilisateur).

## Revendications

1. Procédé de commande d'un avatar (AV_UT1, AV_UT2, AV_UT3 ; AV_UT1', AV_UT2', AV_UT3') dans un environnement virtuel, **caractérisé en ce qu'**en l'absence d'intervention humaine pour animer l'avatar via une interface de commande, le procédé met en oeuvre, dans un dispositif de commande (DC ; DC'), le déclenchement (S11 ; S10') d'au moins une action (ACT1, ACT2, ACT3 ; ACTm1', ACTm2', ACTm3') de l'avatar dans l'environnement virtuel, ladite au moins une action étant sélectionnée (S4-S6 ; S4'-S6') :
- parmi une première pluralité d'actions (ACT1, ACT2, ACT3) préalablement apprises pendant une durée où l'avatar ou un autre avatar a été animé par au moins un utilisateur dans ledit environnement virtuel, via une interface de commande,
- ou parmi une deuxième pluralité d'actions modélisées numériquement (ACTm1', ACTm2', ACTm3') à partir d'un apprentissage d'actions exécutées par au moins un utilisateur dans un environnement réel correspondant à l'environnement virtuel.

2. Procédé de commande d'un avatar selon la revendication 1, dans lequel :
- ladite première pluralité d'actions comprend un type de mouvement de l'avatar ou de l'autre avatar, ou une interaction de l'avatar ou de l'autre avatar avec un objet ou avec encore un autre avatar, ou une manifestation d'un type de personnalité de l'utilisateur de l'avatar ou de l'autre avatar,
- ladite deuxième pluralité d'actions comprend des actions mises en oeuvre lors de l'utilisation, par au moins un utilisateur, d'un service de communication de données.

3. Procédé de commande d'un avatar selon la revendication 2, dans lequel le type de personnalité de l'utilisateur est identifié à partir d'au moins un message généré par l'utilisateur via au moins un terminal de communication (TC ; TC').

4. Procédé de commande d'un avatar selon l'une quelconque des revendications précédentes, dans lequel le déroulement de ladite au moins une action de l'avatar qui a été déclenchée est enregistré numériquement (S10 ; S11').

5. Procédé de commande d'un avatar selon l'une quelconque des revendications précédentes, dans lequel lorsque ladite au moins une action de l'avatar est déclenchée en rapport avec un événement survenu dans l'environnement virtuel, ladite au moins une action est sélectionnée :
- dans un premier groupe d'actions (GA1, GA2, GA3) de la première pluralité d'actions, les actions dudit premier groupe ayant déjà été exécutées en rapport avec un événement similaire à l'événement survenu,
- dans un deuxième groupe d'actions (GA1', GA2', GA3') de la deuxième pluralité d'actions, les actions dudit deuxième groupe résultant d'une modélisation numérique d'actions exécutées dans un environnement réel en rapport avec un événement similaire à l'évènement survenu.

6. Procédé de commande d'un avatar selon l'une quelconque des revendications précédentes, dans lequel ladite au moins une action sélectionnée est une action de la première pluralité d'actions, respectivement de la deuxième pluralité d'actions, qui a été identifiée préalablement comme une action favorite.

7. Procédé de commande d'un avatar selon l'une quelconque des revendications précédentes, dans lequel ladite au moins une action est sélectionnée aléatoirement parmi la première pluralité d'actions, respectivement la deuxième pluralité d'actions.

8. Dispositif (DC ; DC') de commande d'un avatar dans un environnement virtuel, **caractérisé en ce qu'**il est configuré pour déclencher, en l'absence d'intervention humaine pour animer l'avatar via une interface de commande, au moins une action de l'avatar dans l'environnement virtuel, ladite au moins une action étant sélectionnée :
- parmi une première pluralité d'actions préalablement apprises pendant une durée où l'avatar ou un autre avatar a été animé par au moins un utilisateur dans ledit environnement virtuel, via une interface de commande,
- ou parmi une deuxième pluralité d'actions modélisées numériquement à partir d'un apprentissage d'actions exécutées par au moins un utilisateur dans un environnement réel correspondant à l'environnement virtuel.

9. Programme d'ordinateur comportant des instructions de code de programme pour la mise en oeuvre du procédé de commande d'un avatar selon l'une quelconque des revendications 1 à 7, lorsqu'il est exécuté sur un ordinateur.

10. Support d'informations lisible par un ordinateur, et comportant des instructions d'un programme d'ordinateur selon la revendication 9.
